# EUROPEAN PATENT APPLICATION

(11) **EP 4 552 476 A1**
(43) Date of publication of application: **14.05.2025**
(21) Application number: 23209273.4
(22) Date of filing: 10.11.2023
(51) Int. Cl.: A01F 12/46

(54) **REMOVING BLOCKED GRAINS FROM A COMBINE HARVESTER**

(71) Applicant: CNH Industrial Belgium N.V., 8210 Zedelgem (BE); CNH Industrial America LLC, New Holland, PA 17557 (US)
(72) Inventor: YODER, Denver, New Holland, 17557 (US); VANCOILLIE, Ruben, 8210 Zedelgem (BE); BRYON, Geert, 8210 Zedelgem (BE); VANDERSTICHELE, Michiel, 8210 Zedelgem (BE); VANDEVELDE, Pieter, 8210 Zedelgem (BE); DUQUESNE, Frank, 8210 Zedelgem (BE)
(74) Representative: CNH Industrial IP Department

(57) **Abstract**

The combine harvester comprises a grain cleaning section (2) and a grain elevator (3), the cleaning section comprising one or more clean grain augers (6) configured to deliver clean grains into the grain elevator. The harvester further comprises a rotatable drive axle (7) and a transmission system (8) coupled thereto so that the drive axle (7) drives the one or more augers (6) as well as the elevator (3). The transmission system (8) includes a reversible decoupler mechanism configured to decouple the one or more clean grain augers (6) from the drive axle (7) while not decoupling the elevator (3) from said drive axle (7). These features enable the method of the invention for removing a blockage from the grain elevator (3), by decoupling the one or more clean grain augers (6) and then activating the elevator (3) to remove the blockage, followed by the recoupling of the one or more augers (6).

## Description

### Field of the invention

The present invention is related to combine harvesters, in particular to the mechanisms used for moving clean grain from the cleaning section to the grain tank of a combine harvester.

### State of the art.

Agricultural combine harvesters are used to harvest and process crops such as corn or wheat, separating the grains from the plant residue and collecting clean grains in a grain tank. A combine harvester typically comprises a threshing section and a cleaning section, the latter including sieves for separating clean grains from smaller plant residue. The clean grains are collected in a trough at the bottom of the cleaning section, from where they are transported to a grain tank higher up in the combine's structure. Moving the clean grains upwards is realized by a grain elevator typically comprising a set of paddles actuated by a chain driven by rotating sprockets or the like. Clean grains are supplied to the elevator by one or more rotating augers located at the bottom of the trough.

During operation, it is possible that clean grains become stuck at the bottom of the elevator. Safety systems are usually in place which alert the driver of such a blockage. The harvester is then stopped and the blockage has to be removed before harvesting can continue. In presently known harvesters, this involves the opening of a hatch at the bottom of the elevator, to allow the blocked grains to fall out of the elevator.

This solution however represents a considerable loss of grains as well as a time loss due to the time-consuming interventions by the operator.

### Summary of the invention

The invention aims to resolve the problems highlighted above. This aim is realized by a combine harvester and by a method as described in the appended claims. The present invention is thus related to a combine harvester comprising a grain cleaning section and a grain elevator, the cleaning section comprising one or more clean grain augers configured to deliver clean grains into the grain elevator, the harvester further comprising a rotatable drive axle and a transmission system coupled thereto so that the drive axle, through said transmission system, drives the one or more augers as well as the elevator. The transmission system includes a reversible decoupler mechanism configured to decouple the one or more clean grain augers from the drive axle while not decoupling the elevator from said drive axle. These features enable the method of the invention for removing a blockage from the grain elevator, by decoupling the one or more clean grain augers and then activating the elevator to remove the blockage, followed by the re-coupling of the one or more augers.

The removal of the blockage can thus be realized without grain loss and by a limited intervention from the operator, depending on the type of decoupler mechanism that is applied. One embodiment includes an overcenter mechanism, demanding an easy manual intervention for releasing and resetting the mechanism. Another embodiment includes a reversible clutch that can be activated or deactivated from the driver's cabin.

### Brief description of the figures

Figure 1 is a schematic side view of a combine harvester as known in the art, with an indication of the components which are relevant for the present invention.
Figure 2 illustrates the basic components of a possible transmission system for driving the clean grain auger and the grain elevator in a harvester according to the invention.
Figures 3a and 3b illustrate one embodiment of a mechanism for decoupling the clean grain auger from the main drive axle, in a harvester according to the invention.

### Detailed description of preferred embodiments of the invention

Preferred embodiments will now be described with reference to the drawings. The detailed description is not limiting the scope of the invention, which is defined only by the appended claims.

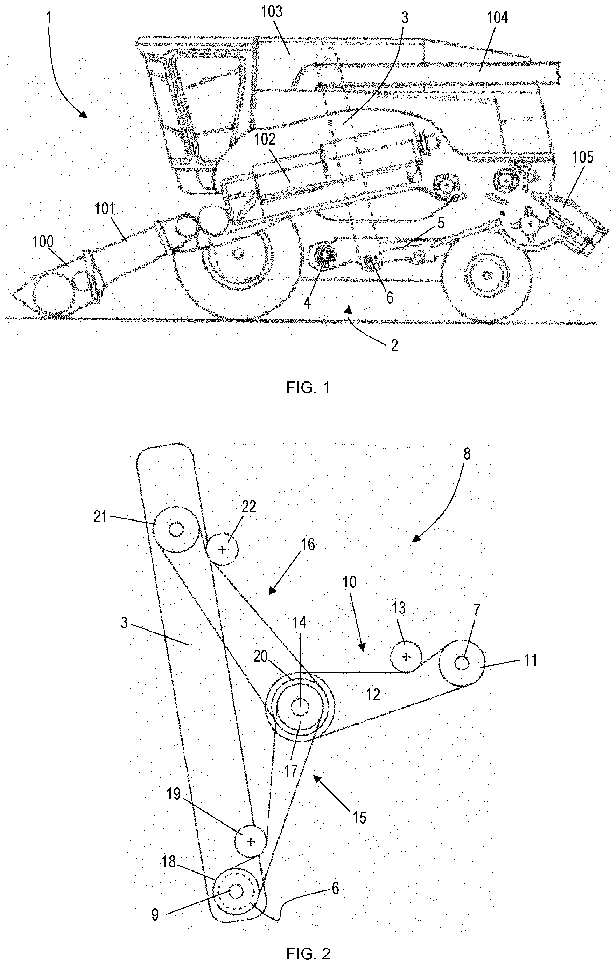

Figure 1 shows a simplified side view of a combine harvester as known in the art. The harvester 1 includes a number of well-known components, including a header 100 for cutting crops from the field, and for gathering the crops towards the inlet of a feeder 101. The feeder delivers the crops to one or two threshing rotors 102 which separate larger plant material from grains and smaller residue. The cleaning section 2 of the harvester includes a blower 4 and a plurality of sieves 5. A clean grain auger 6 is located in a trough at the bottom of the cleaning section 2. In the present description it will be assumed that only one clean grain auger 6 is present, but several of these augers could be mounted side by side and driven synchronously. A grain elevator 3 is depicted as well. The elevator is drawn in dotted lines as it is located on the opposite side of the harvester so as to receive grains delivered by the auger 6. The elevator 3 then transports the grains upwards into a grain tank 103. In most harvesters, grains are evacuated from the tank during a harvesting run by additional grain augers (not shown) at the bottom of the tank, and by a grain spout 104 that can be swivelled outwards so that grains can be deposited in a trailer moving alongside the harvester in the field. At the back of the harvester, larger and smaller plant residue issuing from the threshing rotors 102 and the cleaning section 2 is processed into small particles which are deposited on the field by a spreader 105, not shown in detail but well known in the art.

Figure 2 is a side view of a transmission system 8 for driving the clean grain auger 6 and the elevator 3 in a harvester according to an embodiment of the invention. The image is conceptual and intended only to reflect the functionality and interrelation of a number of constituent elements of the transmission system. The transmission system 8 comprises a drive axle 7, which may be coupled directly or through a gearbox to the harvester's engine or to another suitable power source such as a hydraulic motor. A belt drive 10 comprising pulleys 11 and 12 and a tensioner pulley 13 drives the rotation of an intermediate axle 14. The rotation of the intermediate axle 14 drives two further belt drives 15 and 16 located at different positions along the axle 14. The first belt drive 15 of these two belt drives comprises pulleys 17 and 18 and a tensioner pulley 19. The pulley 18 is fixed to the axle 9 of the clean grain auger 6, indicated by dotted lines. The second belt drive 16 comprises pulleys 20 and 21 and a tensioner pulley 22. Pulley 21 is directly coupled to a sprocket or the like (not shown), for driving a chain to which are attached the paddles (not shown) of the grain elevator 3.

The belt drives 10, 15 and 16 are thereby interconnected, i.e. the rotation of the belt drives is actuated by the rotation of the drive axle 7, provided that all the belt drives are active, i.e. the tensioner pulleys 13,19,22 are exerting a required tensioning force on the respective belts. So when this is the case, the clean grain auger 6 and the grain elevator 3 are active simultaneously, which is the required condition when the harvester is operating in a standard harvesting mode.

According to the invention, the harvester is provided with a reversible decoupler mechanism configured to decouple the rotation of the clean grain auger 6 from the rotation of the drive axle 7, while not decoupling the grain elevator 3 therefrom. Thus, by activating the decoupler mechanism when the harvester is in a standard operating mode, the clean grain auger 6 is stopped while the elevator 3 continues to operate. Also, when the decoupling mechanism is activated (i.e. decoupled) when the cleaning section 2 is not working, activating the transmission system 8 will result in the elevator 3 becoming operational, while the clean grain auger 6 is not rotating. The decoupler mechanism is reversible in the sense that it is configured also to be able to reactivate the clean grain auger 6, i.e. to re-couple the auger 6 to the drive axle 7 after its decoupling. Decoupling and re-coupling is actuated by an operator, either from the driver's cabin or by a manual intervention, depending on the type of decoupling mechanism that is applied (examples thereof will be described further in this text).

The reversible decoupling mechanism enables the method according to the invention for removing a blockage of grains at the bottom of the elevator 3. Such a blockage may be less or more likely to occur depending on the harvesting conditions, such as the humidity of the harvested crops. Modern-day harvesters are usually equipped with sensors configured to detect the blockage and by an alert system for warning the operator who can then shut down the transmission system 8 and thereby the operation of the clean grain auger 6 and the grain elevator 3 in order to avoid damage to these components by a further build-up of blocked grains.

When the system 8 is shut down, blocked grains are accumulated at the bottom area of the elevator 3 and possibly upstream of said bottom area, at the end of the clean grain auger 6. As stated above, the presently known way to remove such a blockage is to open a hatch at the bottom of the elevator and let the grain accumulated in this area drop onto the ground, after which the hatch is again closed and the harvester is restarted.

The invention is based on the finding that removing the blocked grains from the bottom of the elevator 3 is in most cases also possible when the elevator 3 is operated without operating the clean grain auger 6. When the clean grain auger 6 is not exerting pressure on the blocked grains, the grains in the elevator become less compacted and can therefore be removed by the elevator action itself.

Therefore, when a blockage occurs in a harvester according to the invention and provided with the transmission system 8 shown in Figure 2 (or equivalent), the transmission system 8 is stopped and the method of the invention is applied comprising the following steps :
- acting on the decoupler mechanism in order to decouple the clean grain auger 6 from the drive axle 7,
- activating the transmission system 8, thereby activating the elevator 3 but not the clean grain auger 6,
- after a delay sufficient to essentially remove blocked grains from the elevator 3 through the elevator's operation, acting on the decoupler mechanism to re-couple the auger 6 to the drive axle 7 and thereby resume the normal operation of the cleaning section 2.
The delay can be quite brief, in the order of a few seconds, which is normally sufficient to remove the grains from the bottom of the elevator 3. The elevator is preferably still provided with a hatch door, in case the re-activation of the elevator alone is unable to remove the blockage.

The decoupler mechanism can take various forms within the wider scope of the invention. It may for example be a clutch mounted on the axle 9 of the clean grain auger 6 and operable electrically or hydraulically from the driver's cabin.

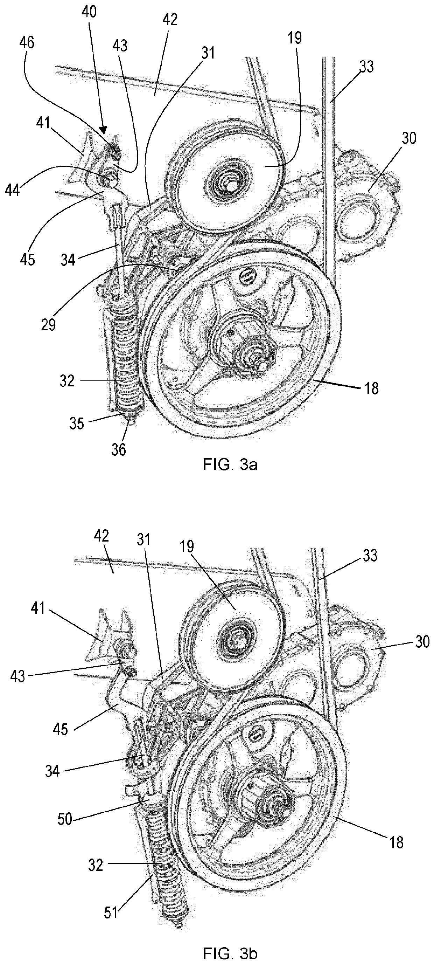

One specific embodiment which has the advantage of being mechanically straightforward and less expensive than an electrically or hydraulically operated clutch is illustrated in Figures 3a and 3b. The images show the pulley 18 of the first belt drive 15, i.e. the pulley that is fixed to the axle 9 of the clean grain auger 6, and the tensioner pulley 19 of said belt drive 15. The pulley 18 is rotatable relative to a support structure 30 that is mounted on the chassis of the harvester. The tensioner pulley 19 is rotatably mounted at one end of a pivotable bracket 31. The bracket 31 is pivotable relative to the support structure 30 about a pivot axis 29 that is oriented essentially parallel to the rotation axes of the pulleys 18 and 19. The other end of the bracket 31, i.e. the end opposite the tensioner pulley 19 with respect to the pivot axis 29, is pushed upward by the spring force exerted by a compressed linear spring 32. The bracket 31 thus acts as a lever that pushes the tensioner pulley 19 against the belt 33 of the belt drive 15, thereby realizing the belt tension required for actuating the rotation of the pulley 18.

The lower end of the spring 32 is coupled to the lower extremity of a rod 34 arranged partially and essentially coaxially inside the spring 32. In the embodiment shown, the spring 32 is supported at its lower end by a washer 35, and the rod 34 passes through said washer 35. The rod 34 is furthermore threaded or at least provided with a threaded end section and fixed to the washer 35 by a nut 36 screwed onto the rod 34 and tightened against the underside of the washer 35.

The upper extremity of the rod 34 is coupled to an overcenter mechanism 40 attached to a fixed point of the support structure, in this case to a bracket 41 that is fixed to the side of an inclined tube 42. Inside the tube 42 is an auger (not shown) configured to recycle chaff to the threshing rotors 102. The attachment location of the overcenter mechanism 40 can however be any other suitable location that is fixed with respect to the support structure 30.

The overcenter mechanism 40 is shown in the locked condition in Figure 3a. It comprises a first plate portion 43 that is pivotable relative to the support bracket 41 at a first pivot point 44, and a second plate portion 45 that is pivotable relative to the first plate portion 43 at a second pivot point 46. The second plate portion 45 is hook-shaped and fixed to the upper extremity of the rod 34. In the locked state illustrated in Figure 3a, the first plate portion 43 is pivoted upwards, until the hook-shaped plate portion 45 contacts the pivot axle of the first pivot point 44, thereby bringing the second pivot point 46 into an overcenter position relative to the point where the lower extremity of the rod 34 is attached to the spring 32. By locking the mechanism 40 in this way, the spring 32 is pulled upwards and compressed between the washer 35 and the outer end of the pivotable bracket 31, thereby exerting the required tensioning force on the tensioner pulley 19, as described above.

The overcenter mechanism 40 is released by forcing the first plate portion 43 to pivot to the left, for example by impacting the first plate portion with a hammer. It is also possible to implement an actuator, like a hydraulic, pneumatic or electric actuator, to release or lock the overcenter mechanism 40, so that releasing or locking can be activated remotely, for example by the operator from within the cab, and/or that releasing/locking can be activated as part of an automation sequence of actions to remove the grain blockage automatically. The result after releasing the overcenter mechanism 40 is shown in Figure 3b. The first plate portion 43 hangs more or less vertically down and the second plate portion 45 is brought out of its overcenter position, moving the rod 34 downward along with the lower end of the spring 32. The spring 32 relaxes and the spring force is removed from the bracket 31, thereby removing the tensioning force exerted by the tensioning roll 19.

In the embodiment shown, an insert 50 is mounted in the spring 32, the insert having a sphere-shaped upper surface for facilitating the angular movements of the rod 34 relative to the bracket 31 as a consequence of the various rotation points of the structure. The spring 32 is also provided with a spring force control strip 51, known as such in the art, for checking whether the correct tensioning force is being maintained. Adjustment of the spring force can be done by screwing or unscrewing the nut 36.

Various other alternatives could be devised for temporarily releasing the tensioning force exerted by the tensioning roll 19. This could for example be done also without an overcenter mechanism, by pivotably connecting the rod 34 (using a longer rod) to the bracket 41 and by compressing the spring 32 by screwing the nut 36 upwards along a threaded portion of the rod until the desired spring force is reached. Releasing the spring force can then be done by unscrewing the nut 36. This system would be more time consuming but it would also allow to release and restore the tensioning force on roll 19 without decoupling the grain elevator 3 from the main drive axle 7.

As stated, another alternative could be to apply a reversible clutch. In that case, the transmission system 8 would not need to include a belt drive for driving the clean grain auger. Some or all of the belt drives could then be replaced by other drive mechanisms, such as gear transmissions or direct drives involving rotatable drive shafts such as a cardan shaft or the like.

## Claims

1. A combine harvester (1) comprising a grain cleaning section (2) and a grain elevator (3), the cleaning section comprising a blower (4), a plurality of sieves (5) and one or more clean grain augers (6) configured to deliver clean grains into the grain elevator, the harvester further comprising a rotatable drive axle (7) and a transmission system (8) coupled thereto so that the drive axle, through said transmission system, drives the one or more augers (6) as well as the elevator (3),
**characterized in that** the transmission system (8) includes a reversible decoupler mechanism configured to decouple the one or more clean grain augers (6) from the drive axle (7) while not decoupling the elevator (3) from said drive axle (7).

2. The harvester according to claim 1, wherein the transmission system (8) comprises a plurality of interconnected belt drives (10,15,16), comprising a first belt drive (15) configured to drive the rotation of the one or more clean grain augers (6) and a second belt drive (16) for driving the operation of the grain elevator (3).

3. The harvester according to claim 2, wherein the first belt drive (15) comprises a spring-operated tensioner pulley (19) for exerting a tensioning force on the belt (33) of said first belt drive, said tensioning force being required for actuating the rotation of the one or more augers (6) through the first belt drive, and wherein the decoupler mechanism is configured to relieve said tensioning force, thereby decoupling the one or more clean grain augers (6) from the drive axle (7).

4. The harvester according to claim 3, wherein the decoupler mechanism includes an overcenter mechanism (40) configured to be movable between a locked state and an unlocked state, and connected to the tensioner pulley (19) in such a way that when the overcenter mechanism is in the locked state, the tensioner pulley is exerting the required tensioning force and when the overcenter mechanism is in the unlocked state, the tensioning force is relieved.

5. The harvester according to claim 4, wherein the tensioner pulley (19) is rotatably mounted at one end of a pivotable bracket (31), the bracket being pivotable about a pivot axis (29) that is in a fixed position relative to the one or more augers (6), the other end of said bracket being coupled to one end of a linear spring (32), and wherein the other end of said spring is coupled to said overcenter mechanism (40) in such a manner that when the overcenter mechanism is in the locked state, the spring force exerted by the spring (32) is causing the tensioner pulley (19) to exert said required tensioning force.

6. The harvester according to claim 5, wherein the spring (32) is mounted underneath said other end of the pivotable bracket (31) so that the upper end of the spring is in contact with the bracket (31), and wherein a rod (34) passes through the spring (32), said rod being connected to the lower end of the spring at its lower extremity, and wherein the upper extremity of the rod (34) is fixed to the overcenter mechanism (40).

7. The harvester according to claim 1 or 2, wherein the decoupler mechanism includes a releasable clutch.

8. A method for removing clean grains from a grain elevator (3) of a harvester according to any one of the preceding claims, after a blockage of said elevator, and after stopping the transmission system (8), the method comprising the steps of :
- acting on the decoupler mechanism in order to decouple the one or more clean grain augers (6) from the drive axle (7),
- activating the transmission system (8), thereby activating the elevator (3) but not the one or more clean grain augers (6),
- after a delay sufficient to essentially remove blocked grains from the elevator (3) through the elevator's operation, acting on the decoupler mechanism to re-couple the one or more clean grain augers (6) to the drive axle (7).
